# EUROPEAN PATENT APPLICATION

(11) **EP 4 687 091 A1**
(43) Date of publication of application: **04.02.2026**
(21) Application number: 25191398.4
(22) Date of filing: 23.07.2025
(51) Int. Cl.: G06Q 30/0201

(54) **SYSTEMS AND METHODS FOR AUTOMATED PREDICTION OF INSIGHTS FOR VENDOR PRODUCT ROADMAPS**

(30) Priority: 02.08.2024 US 202418793346
(71) Applicant: Ingram Micro Inc., Irvine, CA 92612 (US)
(72) Inventor: SAHOO, Sanjib, Naperville, IL 60564 (US)
(74) Representative: Wachinger, Julian Friedrich

(57) **Abstract**

Computerized systems and methods are described for generating and optimizing vendor product roadmaps using predictive insights. Leveraging a Real-Time Data Mesh (RTDM) module, data from diverse sources including market trends, customer feedback, and technological advancements is aggregated and standardized. An Analytics and Machine-Learning (AAML) module analyzes this data to generate predictive insights, facilitating adjustments to existing product roadmaps. Dynamic adjustments are made using a roadmap optimization module, with communication facilitated through a Single Pane of Glass (SPoG) user interface (UI). Scenario analysis, decision-support systems, and continuous monitoring improve strategic decision-making.

## Description

### CROSS REFERENCE TO RELATED APPLICATIONS

This application is a Continuation-In-Part (CIP) of U.S. Patent Application No. 18/341,714, filed on June 26, 2023 and U.S. Patent Application No. 18/349,836, filed on July 10, 2023. This application also claims the benefit of U.S. Provisional Application No. 63/513,073, filed on July 11, 2023; U.S. Provisional Application No. 63/513,078, filed on July 11, 2023; U.S. Provisional Application No. 63/515,075, filed on July 21, 2023; and U.S. Provisional Application No. 63/515,076, filed on July 21, 2023. Each of these applications is incorporated herein by reference in its entirety.

### BACKGROUND

Traditional ordering processes in distribution and supply-chain platforms are marred with inefficiencies, delays, and inaccuracies. In the conventional landscape, multiple systems and vendors usually perform each activity independently, from creating a bill of materials to registering deals, applying pricing, generating quotes, and submitting orders. This approach leads to operational inefficiencies and a heightened likelihood of errors.

Enterprise Resource Planning (ERP) systems have served as the mainstay in managing business processes, including distribution and supply chain. These systems act as central repositories where different departments such as finance, human resources, and inventory management can access and share real-time data. While ERPs are comprehensive, they present several challenges in today's complex distribution and supply chain environment. One of the primary challenges is data fragmentation. Data silos across different departments or even separate ERP systems make real-time visibility difficult to achieve. Users lack a comprehensive view of key distribution and supply chain metrics, which adversely affects decision-making processes.

Moreover, ERP systems often do not offer effective data integration capabilities. Traditional ERP systems are not designed to integrate efficiently with external systems or even between different modules within the same ERP suite. This design results in a cumbersome and error-prone manual process to transfer data between systems and affects the flow of information throughout the supply chain. Data inconsistencies occur when information exists in different formats across systems, hindering accurate data analysis and leading to uninformed decision-making.

Data inconsistency presents another challenge. When data exists in different formats or units across departments or ERPs, standardizing this data for meaningful analysis becomes a painstaking process. Businesses often resort to time-consuming manual processes for data transformation and validation, which further delays decision-making. Additionally, traditional ERP systems often lack the capabilities to handle large volumes of data effectively. These systems struggle to provide timely insights for operational improvements, particularly problematic for businesses dealing with complex and expansive distribution and supply chain networks.

Data security is another concern, especially considering the sensitive nature of supply chain data, which includes customer details, pricing, and contracts. Ensuring compliance with global regulations on data security and governance adds an additional layer of complexity. Traditional ERP systems often lack robust security features agile enough to adapt to the continually evolving landscape of cybersecurity threats and compliance requirements.

### BRIEF SUMMARY OF THE INVENTION

Automated Predicting Insights for Vendor Product Roadmap (PIPR) processes are designed to improve product development and market strategy optimization in the technology sector by leveraging a sophisticated integration of systems and activities through a unified interface. This system facilitates the generation of actionable insights for product roadmap development, ensuring alignment with market demands and enhancing competitive positioning. In some embodiments, a Real-Time Data Mesh (RTDM) aggregates and standardizes high-velocity, real-time data from diverse sources. This data foundation supports dynamic, data-driven decision-making and incorporates advanced security measures to protect sensitive information.

In some embodiments, a Single Pane of Glass User Interface (SPoG UI) serves as a primary interaction layer, offering users comprehensive tools for data analysis and visualization. This interface simplifies the extraction and interpretation of actionable insights, enabling an agile response to market changes. An Advanced Analytics and Machine-Learning (AAML) Module, incorporating specialized algorithms, analyzes data to conduct sentiment analysis, trend forecasting, and customer behavior analytics. It employs machine learning algorithms that are continuously refined based on feedback loops, enhancing the accuracy of predictive insights for roadmap adjustments. This module's capabilities extend to extracting insights from unstructured text and incorporating explainable AI to offer transparency in the predictive modeling process.

In some embodiments, a Product Roadmap Insights (PRI) Module implements analytics processed by the AAML Module to generate targeted insights, recommending strategic adjustments to product roadmaps. It leverages predictive analytics to ensure products meet customer demands, employing dynamic catalog management and predictive maintenance features to improve product reliability. A Market Analysis Sub-Module can be configured to extend these capabilities further by analyzing market demand, competitor benchmarks, and industry trends to identify opportunities for innovation and differentiation.

In some embodiments, an Innovation Opportunity Engine dynamically identifies product development opportunities by analyzing market data and customer insights, suggesting areas for innovation aligned with market needs. In a non-limiting example, a Strategy Adjustment Engine is configured to allow vendors to adapt their product roadmaps in real-time, based on insights derived from the system, ensuring flexibility in response to market dynamics. In a non-limiting example, Roadmap Optimization Generator and Competitive Positioning Calculator are configured to respectively optimize product strategies and recommend market positioning strategies, improving vendors' competitive position.

In a non-limiting example, a Consistency Verifier ensures the alignment of roadmap strategies with market data and vendor objectives, employing algorithms to prevent errors and support strategic planning. System 700 integrates these components to automate the generation of predictive insights, streamlining the process of developing and adjusting vendor product roadmaps. This comprehensive approach not only improves strategic decision-making but also positions vendors for success in a rapidly evolving technology landscape.

In an embodiment, a Subscription Management and Real-Time Pricing module(s) operably connected with the RTDM and SPoG UI manages the lifecycle of subscriptions. The module(s) optimize service options based on real-time data, using algorithms to dynamically adjust pricing and service configurations. The system includes a pricing engine for cost prediction, adapting to variables like usage intensity and market trends.

In some embodiments, the system enables users to convert their selections into a subscription model with a single click via the SPoG UI. It includes a module for checking user permissions and aggregating configuration options based on current offerings, streamlining the subscription management process.

Additionally, or alternatively, the system employs validation algorithms, such as support vector machines, to ensure the accuracy of subscription configurations. It synchronizes real-time data from various systems, ensuring consistent and up-to-date information across the subscription model.

Embodiments disclosed herein integrate multiple systems, automate processes, and validate to automate the conversion of technology products into subscription-based services. By implementing intelligent rules and validations, the system efficiently executes complex tasks, reducing time and errors. The system's adaptability ensures it remains current and evolves to meet market and customer demands.

The system uses data-driven methods to automate creation and management of subscription packages based on user consumption patterns. This includes assembling various technology products and services into coherent subscriptions that align with individual usage patterns and preference. The system generates user profiles based on comprehensive data analysis, encompassing aspects like digital engagement and technology preferences. This data informs the creation of subscription packages that meet specific user requirements in areas such as software applications, cloud computing, and hardware needs.

In this process, personas are automatically generated based on comprehensive market research and real user data, broadly encompassing attributes including demographics, purchasing patterns, digital engagement, and preferences across various product categories. The identification of personas allows for a nuanced understanding of customer needs in areas such as technology, software applications, cloud computing solutions, and hardware requirements.

The system incorporates advanced algorithms to analyze user data, including historical usage and interaction patterns, to discern preferences and anticipate needs. This facilitates the creation of vendor product roadmaps that are highly relevant and appealing. Automated vendor product roadmaps can integrate products and services from different categories, ensuring each package meets the user's technological and service needs. Automated PIPR generation can include combinations like hardware with compatible software solutions and cloud services, designed to improve user productivity and efficiency.

### Single Pane of Glass

The Single Pane of Glass (SPoG) can provide a comprehensive solution that is configured to address these multifaceted challenges. It can be configured to provide a holistic, user-friendly, and efficient platform that streamlines the distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to streamline SKU management and product localization, SPoG integrates data from various OEMs into a single platform. This not only ensures data consistency but also significantly reduces the potential for errors. Furthermore, it provides capabilities to manage and distribute localized SKUs efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, streamlining inventory management, ensuring compliance, simplifying SKU management, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. The RTDM offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies SKU management and localization by integrating data from various OEMs, ensuring data consistency and reducing error potential. Its capabilities for managing and distributing localized SKUs align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. Firstly, it offers a holistic solution to the longstanding problems in the distribution industry. With the RTDM's capabilities, SPoG can enhance supply chain visibility, streamline inventory management, ensure compliance, simplify SKU management, and deliver a superior customer experience.

The real-time tracking and analytics offered by RTDM improve SPoG's ability to manage the supply chain and inventory effectively. It provides accurate and current information, enabling distributors to make informed decisions quickly.

Integrating SPoG with RTDM also ensures data consistency and reduces errors in SKU management. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates an embodiment of a system for distribution management.
FIG. 4 depicts a system for automated PIPR and product roadmap generation processes, according to an embodiment.
FIG. 5 illustrates an RTDM module, according to an embodiment.
FIG. 6 illustrates a SPoG UI, according to an embodiment.
FIG. 7 illustrates a system for automated PIPR and product roadmap generation processes, according to an embodiment.
FIG. 8 is a flow diagram of a method for automated predictive analytics and insight generation in a PIPR system, according to some embodiments of the present disclosure.
FIG. 9 is a flow diagram for automated roadmap adjustment and optimization in a PIPR system, according to some embodiments of the present disclosure.
FIG. 10 is a flow diagram for automated Real-Time Data Integration and Analysis Flow within a PIPR system, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

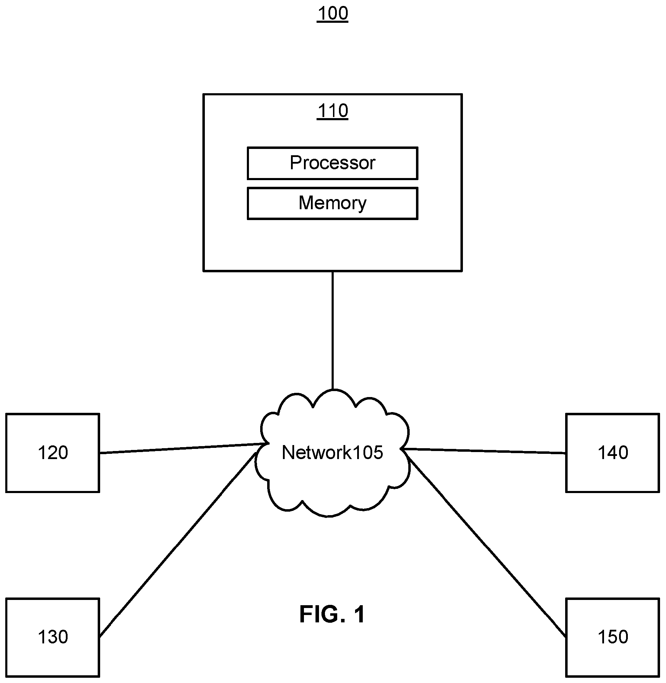

FIG. 1 illustrates an operating environment 100 of a distribution platform, referred to as System 110 in this embodiment. System 110 operates within the context of an information technology (IT) distribution model, catering to various users such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, enabling them to make informed decisions and optimize their IT infrastructure.

End customers 130 can be the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain operations, manage pricing and promotions, and gain insights into customer preferences and market trends. By integrating with System 110, vendors can expand their reach, access new markets, and enhance their overall visibility and competitiveness.

Resellers 150 can be intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there can be various dynamics and characteristics that contribute to its effectiveness. These dynamics include real-time data exchange, integration with existing enterprise systems, scalability, and flexibility. System 110 ensures that relevant data can be exchanged in real-time between users, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

System 110 can achieve scalability and flexibility. It can accommodate the growing demands of the IT distribution model, whether it involves an expanding customer base, an increasing number of vendors, or a wider range of IT products and services. System 110 can be configured to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these users. By leveraging real-time data exchange, integration, scalability, and flexibility, System 110 enables users to optimize their operations, enhance customer experiences, and drive business success within the IT distribution ecosystem.

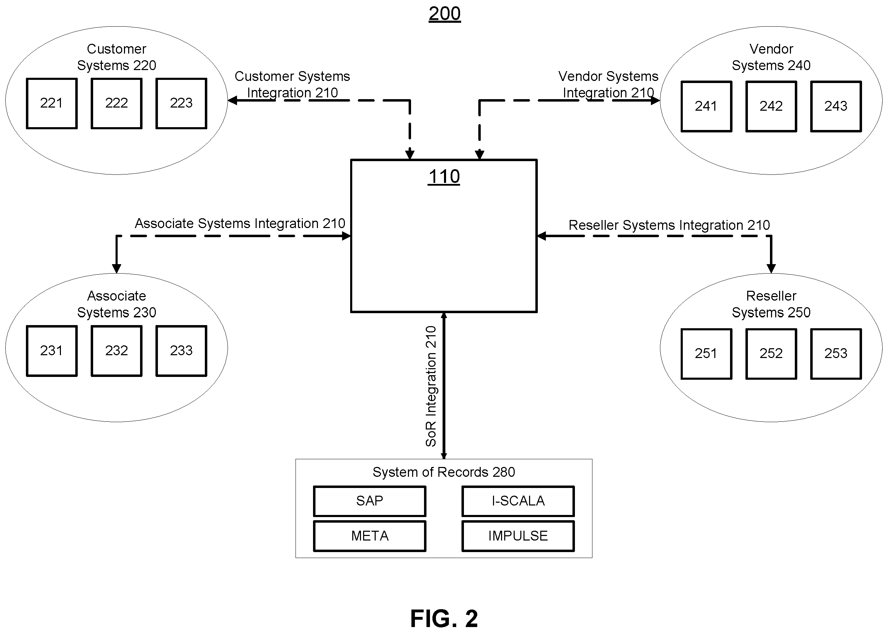

FIG. 2 depicts the operating environment 200 of the PIPR platform, expanding upon elements introduced in FIG. 1. This environment features integration points 210, enabling data flow and connectivity among various systems like customer systems 220, vendor systems 240, reseller systems 260, and other entities critical to the predictive insights process. FIG. 2 showcases the network's interconnectedness and the mechanisms that facilitate collaborative and data-driven decision-making for optimizing vendor product roadmaps. Operating environment 200 is configured to leverage AI and ML technologies to automate the process of generating predictive insights, analyzing comprehensive data sets for strategic product development.

Some embodiments of the PIPR process involve a structured approach to analyze vast amounts of data, including market trends, consumer feedback, and product performance metrics, transforming this data into actionable insights for vendor product roadmaps. This process utilizes key technological components: Data collected from CRM systems, web analytics tools, and direct customer interactions feeds into the Real-Time Data Mesh (RTDM). RTDM processes and standardizes this data, acting as a centralized hub for real-time insights. The Advanced Analytics and Machine Learning (AAML) Module then analyzes this aggregated data to identify trends, preferences, and opportunities for demand forecasting and market adaptation. Informed by AAML Module insights, the PIPR Management Module tailors product development strategies and roadmap adjustments, applying predictive models to align offerings with forecasted market demands. Users, through the SPoG UI, interact with these insights, enabling a dynamic and responsive approach to product roadmap planning. The system includes a feedback mechanism to capture market responses, refining predictive models for continual improvement.

AI algorithms within the PIPR process are tailored to optimize product roadmaps through advanced data analysis. Machine learning models, such as deep learning networks and decision trees, are employed to process and interpret complex data sets. These models enable the system to forecast market trends and consumer needs with high accuracy. The integration of AI and ML technologies in operating environment 200 utilizes both supervised and unsupervised learning algorithms for comprehensive pattern recognition and predictive analytics, ensuring that product roadmaps remain agile and aligned with evolving market conditions.

Operating environment 200 positions System 110 as the central platform for managing the PIPR process, bridging customer systems 220, vendor systems 240, reseller systems 260, and other relevant entities. It facilitates communication, data exchange, and collaborative decision-making, offering a unified interface for all stakeholders. Integration points 210 employ a hybrid architecture combining RESTful APIs and WebSockets to ensure efficient, real-time data exchange and synchronization across the network, secured with SSL/TLS protocols to protect data integrity.

Customer System Integration: Integration point 210 enables System 110 to connect with customer systems 220, facilitating efficient data exchange and synchronization. Customer systems 220 may include entities like customer system 221, customer system 222, and customer system 223. These systems represent internal systems used by customers, such as ERP or CRM systems. Integration with customer systems 220 allows customers to be involved in the PIPR process. This integration offers an automated, real-time solution for automating PIPR processes, improving operational efficiency for customers.

Data exchange among customer systems 220, vendor systems 240, and reseller systems 260 is enabled by a robust ETL process, ensuring data consistency and reliability. This interaction can be governed by predefined business rules and logic, which dictate the data flow and processing methodologies. Advanced mapping and transformation tools are employed to harmonize disparate data formats, allowing for integration and utilization of data across these systems. Orchestrated data exchange supports synchronized operations, enabling efficient and informed decision-making across the distribution network.

Associate System Integration: Integration point 210 enables System 110 to connect with associate systems 230, facilitating efficient data exchange and synchronization. These systems contribute to the overall efficiency of PIPR processing by providing relevant market and product data.

Vendor System Integration: Integration point 210 facilitates the connection between System 110 and vendor systems 240. Vendor systems 240 may include entities like vendor system 241, vendor system 242, and vendor system 243, representing inventory management, pricing systems, and product catalogs. Integration with vendor systems 240 ensures vendors can efficiently update their offerings and receive real-time notifications, facilitating the PIPR process.

Reseller System Integration: Integration point 210 allows reseller systems 260 to connect with System 110. Reseller systems 260 encompass entities such as reseller system 261, reseller system 262, and reseller system 263, representing reseller operations such as sales, customer management, and order processing. Integration enables resellers to access up-to-date product information and manage customer relationships effectively.

Other Entity System Integration: Integration point 210 also connects other entities involved in the distribution process, facilitating collaboration and efficient distribution. This integration ensures real-time data exchange for automated PIPR processing and decision-making in the distribution ecosystem.

System 110's configuration includes sophisticated AI and ML capabilities to automate PIPR processing according to individual preferences, ensuring relevance and optimization in the distribution process.

Integration points 210 also enable connectivity with System of Records 280, for additional data management and integration. Representing System of Records 280 can represent enterprise resource planning (ERP) systems or customer relationship management (CRM) systems, including both future systems as well as legacy ERP systems such as SAP, Impulse, META, I-SCALA, and others. System of Records can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes. These systems represent the internal systems utilized by customers, vendors, and others.

Integration points 210 within the operating environment 200 can be facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable data exchange.

In some embodiments, System 110 can incorporate authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable users to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and improves operational efficiency throughout the distribution platform.

In some embodiments, System 110 leverages advanced technologies such as Typescript, NodeJS, ReactJS, .NET Core, C#, and other suitable technologies to support the integration points 210 and enable communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable users to operate within a connected ecosystem. Data generated at various touchpoints, including customer orders, inventory updates, pricing changes, or delivery status, flows between the different entities, systems, and components. The integrated data can be processed, harmonized, and made available in real-time to relevant users through System 110. This real-time access to accurate and current information enables users to make informed decisions, optimize supply chain operations, and improve customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

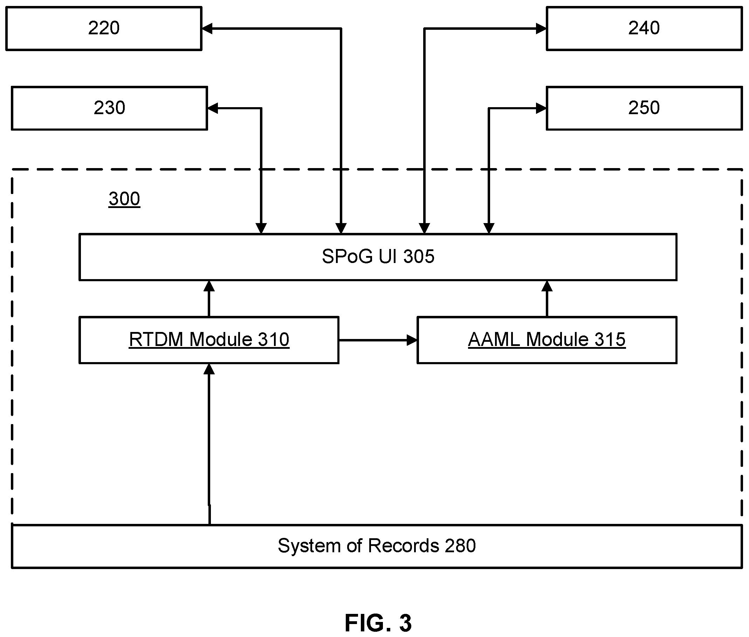

FIG. 3 illustrates a system 300 for supply chain and distribution management. System 300 (FIG. 3) is a supply chain and distribution management solution configured to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing users with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, enabling them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the distribution ecosystem. SPoG UI 305 is designed with a user-centric approach, featuring an intuitive and responsive layout. It utilizes front-end technologies to render dynamic and interactive data visualizations. Customizable dashboards allow users to tailor their views based on specific roles and requirements. The UI supports drag-and-drop functionality for ease of use, and its adaptive design ensures compatibility across various devices and platforms. Advanced filtering and search capabilities enable users to efficiently navigate and access relevant supply chain data and insights.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another component of System 300, responsible for ensuring the flow of data within the distribution ecosystem. It aggregates data from multiple sources, harmonizes it, and ensures its availability in real-time.

In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data can be then made available in real-time, allowing users to access accurate and current information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component can be specifically configured to work with various transactional systems, including legacy ERP systems, Customer Relationship Management (CRM) systems, and other enterprise-wide systems, ensuring compatibility and flexibility for businesses operating in diverse environments.

By having access to real-time data, users can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By leveraging machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

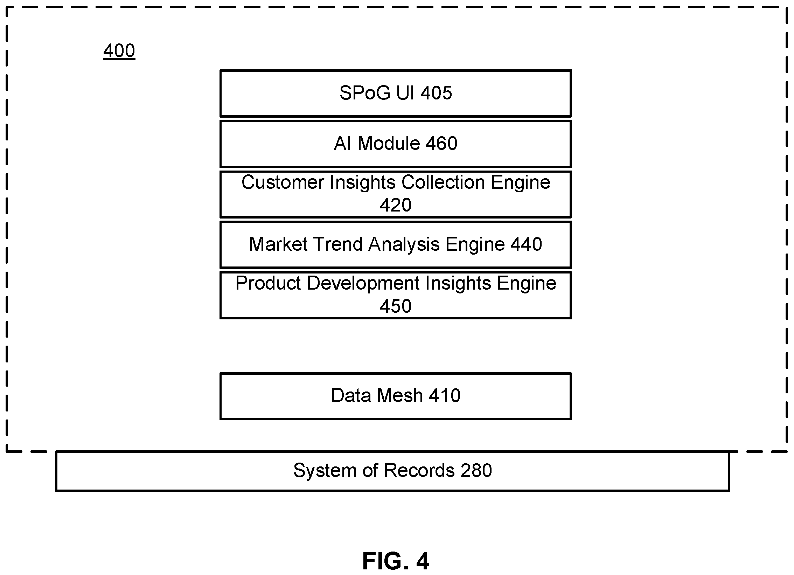

FIG. 4 illustrates an embodiment of System 400 for automated Predicting Insights for Vendor Product Roadmap (PIPR), designed to generate actionable insights for product development and market strategy optimization. The system comprises key components: Single Pane of Glass User Interface (SPoG UI) 405, Data Mesh 410, AI Module 460, Customer Insights Collection Engine 420, Product Development Insights Engine 450, and Market Trend Analysis Engine 440. This architecture is configured to support vendors in performing roadmap forecasting and strategic market positioning.

SPoG UI 405 acts as the interactive interface for users, enabling the input of data and parameters for analysis while displaying insights into market trends, customer behavior, and potential roadmap adjustments. It directly connects to AI Module 460 for processing and visualizing predictive analytics, facilitating an intuitive and responsive user experience for strategic decision-making.

The SPoG UI 405 serves as the central hub for user interaction, offering tools and functionalities for data analysis, visualization, and simulation of market and customer insights. This interface provides access to real-time and historical data analyses, market trend observations, and product roadmap suggestions, integrating with the broader system components to present a unified analytics dashboard. Developed using advanced web technologies, SPoG UI 405 ensures accessibility from a wide range of devices, improving operational flexibility and responsiveness.

Data Mesh 410 functions as an advanced data integration and management framework, aggregating and harmonizing data from diverse sources, including internal customer databases, external market research platforms, and third-party data services. It ensures a unified data repository for all operational modules within System 400, facilitating access to consistent, up-to-date information crucial for informed decision-making on product development and market strategies.

Within Data Mesh 410, real-time data processing capabilities are emphasized, supporting dynamic updates to insights and predictions. The module employs advanced techniques such as Change Data Capture (CDC) for tracking updates in data sources, ensuring that the system's predictive models and analytical outputs reflect the latest market conditions and customer feedback.

AI Module 460 leverages sophisticated machine learning algorithms and data analytics to process inputs from Data Mesh 410 and Customer Insights Collection Engine 420, generating predictive insights into market dynamics, customer needs, and roadmap opportunities. This analysis informs strategic decisions on product features, development priorities, and market entry timing.

AI Module 460 incorporates a variety of analytical techniques, including deep learning for pattern recognition in market trends, decision trees for strategic decision support, and clustering for market segmentation. These methodologies enable the module to offer nuanced insights into customer preferences and behavior, supporting targeted product roadmap forecasting and differentiation strategies.

The module also utilizes reinforcement learning to refine product strategies based on ongoing market feedback, ensuring that product development efforts are continuously aligned with market demands and customer expectations. Natural Language Processing (NLP) techniques are employed to analyze customer feedback and market commentary, enriching the product development insights with qualitative data.

Real-time processing capabilities of AI Module 460, supported by Data Mesh 410, enable dynamic adjustment of product strategies based on the latest market trends and customer interactions. Predictive analytics tools facilitate forecasting future market demands, while Monte Carlo simulations and scenario analysis assist in evaluating strategic options and their potential market impacts.

Customer Insights Collection Engine 420 (CICE 420) is designed to autonomously aggregate and analyze customer data across multiple touchpoints, including direct feedback, social media interactions, purchase history, and engagement analytics. Utilizing one or more functions such as web scraping, API integrations, and direct data feeds, CICE 420 compiles a comprehensive dataset that reflects customer behaviors, preferences, and sentiment. This engine employs natural language processing (NLP) to interpret open-ended feedback, sentiment analysis algorithms to gauge customer satisfaction, and machine learning models to identify patterns in purchasing behavior. The data collected is sanitized and structured for compatibility with the broader System 400 ecosystem, particularly for analysis by AI Module 460.

CICE 420 feeds structured customer insights into Data Mesh 410, which acts as a centralized repository ensuring data uniformity and accessibility. This integration enables AI Module 460 to utilize up-to-date customer insights for generating predictive analytics, ensuring recommendations are closely aligned with current customer needs and expectations. In a non-limiting example, CICE 420 may collect and analyze customer reviews from online retail sites via Data Mesh 410 to gauge sentiment about a new software update, for generation of a recommendation to a vendor to address any prevalent issues in the next update cycle.

Product Development Insights Engine 450 (PDIE 450) applies sophisticated analytics to transform aggregated market data and customer insights into actionable product development strategies. Leveraging advanced data analytics, including regression analysis to predict future market needs and conjoint analysis for evaluating product feature trade-offs, PDIE 450 identifies areas where product innovations or improvements can provide competitive advantages. This engine integrates closely with AI Module 460, utilizing its predictive modeling capabilities to forecast market reactions to potential product changes, enabling data-driven decision-making. In a non-limiting example, PDIE 450 in operation with one or more AI/ML models and statistical algorithms provided by AI Module 460 may analyze historical sales data and external market conditions to forecast demand for a new smartphone model. This analysis enables a mobile phone vendor to adjust its production schedules and marketing strategies to align with anticipated demand peaks and valleys. In another example, PDIE 450 may identify a gap in a vendor's market for environmentally friendly packaging based on competitor analysis and consumer trend data, which may be incorporated to provide insights for improving biodegradable packaging solutions.

PDIE 450's recommendations are incorporated into Data Mesh 410, facilitating a dynamic feedback loop with AI Module 460, which refines these insights through predictive modeling. This integration ensures that product development strategies are not only informed by historical data but are also forward-looking, taking into account projected market trends and customer preferences.

Market Trend Analysis Engine 440 (MTAE 440) is tasked with continuously monitoring and analyzing global market trends, competitor strategies, and regulatory landscapes. Utilizing a combination of data mining techniques for gathering relevant market intelligence and complex event processing for real-time trend analysis, MTAE 440 provides a comprehensive overview of the external factors affecting market dynamics. This engine employs predictive analytics to forecast future market shifts, offering a strategic advantage in anticipating competitor moves and aligning product roadmaps with future market needs. In a non-limiting example, MTAE 440 may monitor global trends indicating a rising interest in home automation, prompting a home appliances manufacturer to invest in smart home devices, facilitating conversion and market share growth early in a trend curve.

The insights generated by MTAE 440 are funneled into Data Mesh 410, enriching the dataset with external market perspectives. This comprehensive market understanding supports AI Module 460 in developing nuanced predictive models that account for both internal customer insights and external market forces, enabling the creation of robust, market-aligned product strategies.

Integration between CICE 420, PDIE 450, and MTAE 440, facilitated through their integration with Data Mesh 410 and AI Module 460, enables System 400 to offer an efficient approach to product roadmap planning. This integrated system architecture ensures that all components contribute to a unified analysis, leveraging diverse data sources to inform strategic product development decisions. By automating the collection, analysis, and application of market and customer insights, System 400 streamlines the product roadmap forecasting process, improving efficiency and effectiveness.

Vendors interact with System 400 through SPoG UI 405, inputting product parameters and market queries to initiate the analysis process. System 400 driven by AI Module 460 in collaboration with the insights engines processes these inputs to deliver strategic recommendations and predictive insights. This process involves complex data transformations and analytics, rendered accessible and actionable through the intuitive interface of SPoG UI 405.

Thereby, System 400 automates the generation of predictive insights for vendor product roadmaps, facilitating advanced market analysis, deep customer insight mining, and strategic product roadmap recommendations. This automation supports vendors in making informed decisions, optimizing product offerings, and staying competitive in dynamic markets.

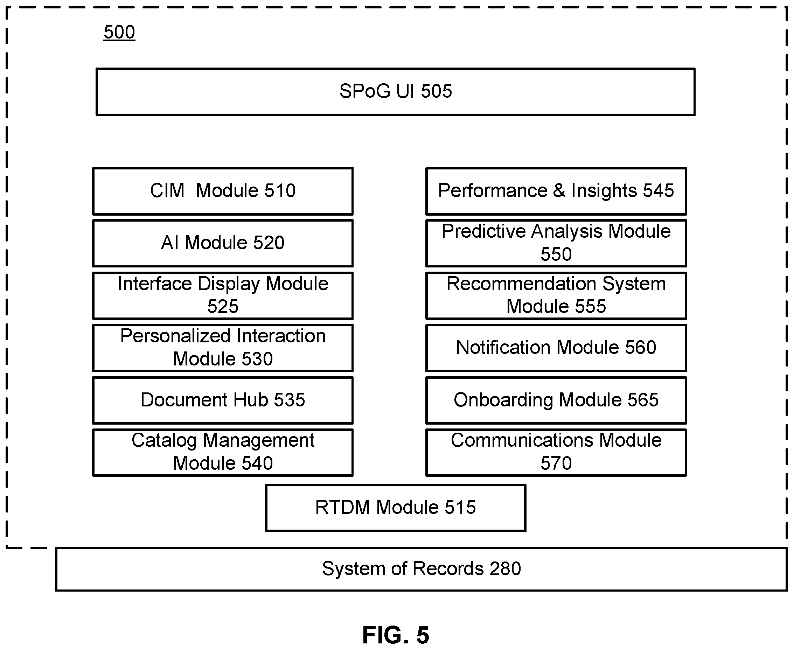

FIG. 5 depicts an embodiment of an advanced distribution platform including System 500 for managing a complex distribution network, which can be an embodiment of System 300, and provides a technology distribution platform for optimizing the management and operation of distribution networks. System 500 includes several interconnected modules, each serving specific functions and contributing to the overall efficiency of supply chain operations. In some embodiments, these modules can include SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570.

System 500, as an embodiment of System 300, can use a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 505, in some embodiments, serves as the central interface within System 500, providing users with a unified view of the entire distribution network. It utilizes frontend technologies such as ReactJS, TypeScript, and Node.js to create interactive and responsive user interfaces. These technologies enable the SPoG UI 505 to deliver a user-friendly experience, allowing users to access relevant information, navigate through different modules, and perform tasks efficiently.

The CIM 510, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for users.

The RTDM module 515, or Real-Time Data Mesh module, is a component of System 500 that ensures the smooth flow of data across the distribution ecosystem. It utilizes technologies such as Apache Kafka, Apache Flink, or Apache Pulsar for data ingestion, processing, and stream management. These technologies enable the RTDM module 515 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows users to access current and accurate information for informed decision-making.

The AI module 520 within System 500 can use advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 520 can utilize predictive models to forecast demand, allowing users to optimize inventory management and minimize stockouts or overstock situations.

The Interface Display Module 525 focuses on presenting data and information in a clear and user-friendly manner. It utilizes technologies such as HTML, CSS, and JavaScript frameworks like ReactJS to create interactive and responsive user interfaces. These technologies allow users to visualize data using various data visualization techniques, such as graphs, charts, and tables, enabling efficient data comprehension, comparison, and trend analysis.

The Personalized Interaction Module 530 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, improving customer satisfaction and driving sales.

The Document Hub 535 serves as a centralized repository for storing and managing documents within System 500. It utilizes technologies like SeeBurger and Elastic Cloud for efficient document management, storage, and retrieval. For instance, the Document Hub 535 can employ SeeBurger's document management capabilities to categorize and organize documents based on their types, such as contracts, invoices, product specifications, or compliance documents, allowing users to easily access and retrieve relevant documents when needed.

The Catalog Management Module 540 enables the creation, management, and distribution of current product catalogs. It ensures that users have access to the latest product information, including specifications, pricing, availability, and promotions. Technologies like Kentico and Akamai can be employed to facilitate catalog updates, content delivery, and caching. For example, the module can use Akamai's content delivery network (CDN) to deliver catalog information to users quickly and efficiently, regardless of their geographical location.

The Performance and Insight Markers Display 545 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling users to take proactive measures to optimize operations.

The Predictive Analytics Module 550 employs machine learning algorithms and predictive models to forecast demand patterns, optimize inventory levels, and improve overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing users to optimize inventory levels and minimize costs.

The Recommendation System Module 555 focuses on providing intelligent recommendations to users within the distribution network. It generates personalized recommendations for products or services based on customer data, historical trends, and machine learning algorithms. Technologies like Adobe Target and Apache Spark can be employed for data analysis, modeling, and delivering targeted recommendations. For instance, the module can use Adobe Target's recommendation engine to analyze customer preferences and behavior, and deliver personalized product recommendations across various channels, improving customer engagement and driving sales.

The Notification Module 560 enables the distribution of real-time notifications to users regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to users' devices, ensuring timely and relevant information dissemination.

The Self-Onboarding Module 565 facilitates the onboarding process for new users entering the distribution network. It provides guided steps, tutorials, or documentation to help users become familiar with the system and its functionalities. Technologies such as Okta and Kentico can be employed to ensure secure user authentication, access control, and self-learning resources. For instance, the module can utilize Okta's identity and access management capabilities to securely onboard new users, providing them with appropriate access permissions and guiding them through the system's functionalities.

The Communication Module 570 enables communication and collaboration within System 500. It provides channels for users to interact, exchange messages, share documents, and collaborate on projects. Technologies like Apigee Edge and Adobe Launch can be employed to facilitate secure and efficient communication, document sharing, and version control. For example, the module can utilize Apigee Edge's API management capabilities to ensure secure and reliable communication between users, enabling them to collaborate effectively.

Thereby, System 500 can incorporate various modules that utilize a diverse range of technologies and algorithms to optimize supply chain and distribution management. These modules, including SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to improved operational efficiency and success in supply chain and distribution management.

### REAL TIME DATA MESH

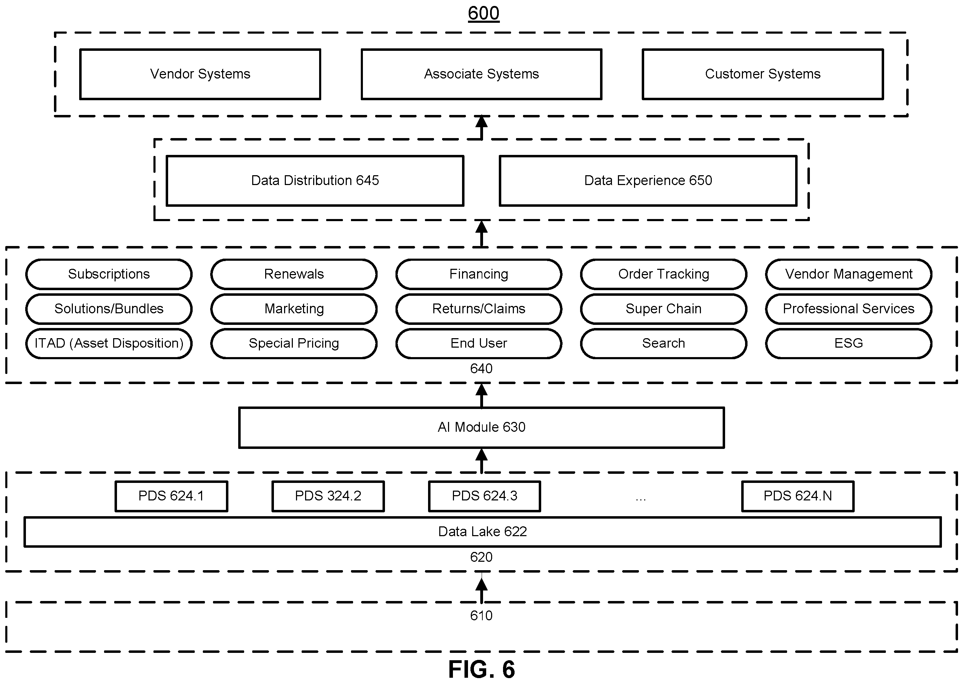

FIG. 6 illustrates RTDM module 600, according to an embodiment. RTDM module 600, which can be an embodiment of RTDM module 310, can include interconnected components, processes, and sub-systems configured to enable real-time data management and analysis.

The RTDM module 600, as depicted in FIG. 5, represents an effective data mesh and change capture component within the overall system architecture. The module can be configured to provide real-time data management and standardization capabilities, enabling efficient operations within the supply chain and distribution management domain.

RTDM module 600 can include an integration layer 610 (also referred to as a "system of records") that integrates with various enterprise systems. These enterprise systems can include ERPs such as SAP, Impulse, META, and I-SCALA, among others, and other data sources. Integration layer 610 can process data exchange and synchronization between RTDM module 600 and these systems. Data feeds can be established to retrieve relevant information from the system of records, such as sales orders, purchase orders, inventory data, and customer information. These feeds enable real-time data updates and ensure that the RTDM module operates with the most current and accurate data.

RTDM module 600 can include data layer 620 configured to process and translate data for retrieval and analysis. Data layer 620 includes data mesh, a cloud-based infrastructure configured to provide scalable and fault-tolerant data storage capabilities. Within the data mesh, multiple Purposive Datastores (PDS) can be deployed to store specific types of data, such as customer data, product data, or inventory data. Each PDS can be optimized for efficient data retrieval based on specific use cases and requirements. The PDSes can be configured to store specific types of data, such as customer data, product data, finance data, and more. These PDS serve as repositories for canonized and/or standardized data, ensuring data consistency and integrity across the system.

In some embodiments, RTDM module 600 implements a data replication mechanism to capture real-time changes from multiple data sources, including transactional systems like ERPs (e.g., SAP, Impulse, META, I-SCALA). The captured data can then be processed and standardized on-the-fly, transforming it into a standardized format suitable for analysis and integration. This process ensures that the data is readily available and current within the data mesh, facilitating real-time insights and decision-making.

More specifically, data layer 620 within the RTDM module 600 can be configured as a powerful and flexible foundation for managing and processing data within the distribution ecosystem. In some embodiments, data layer 620 can encompasses a highly scalable and robust data lake, which can be referred to as data lake 622, along with a set of purposive datastores (PDSes), which can be denoted as PDSes 624.1 to 624.N. These components integrate to ensure efficient data management, standardization, and real-time availability.

Data layer 620 incudes data lake 622, a state-of-the-art storage and processing infrastructure configured to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 622 can accommodate the influx of data from diverse sources.

Associated with data lake 622, a population of purposive datastores, PDSes 624.1 to 624.N, can be employed. Each PDS 624 can function as a purpose-built repository optimized for storing and retrieving specific types of data relevant to the supply chain domain. In some non-limiting examples, PDS 624.1 may be dedicated to customer data, storing information such as customer profiles, preferences, and transaction history. PDS 624.2 may be focused on product data, encompassing details about SKU codes, descriptions, pricing, and inventory levels. These purposive datastores allow for efficient data retrieval, analysis, and processing, catering to the diverse needs of supply chain users.

To ensure real-time data synchronization, data layer 620 can be configured to employ one or more change data capture (CDC) mechanisms. These CDC mechanisms can be integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 620 ensures that the data within the data lake 622 and PDSes 624 remains current, providing users with real-time insights into the distribution ecosystem.

In some embodiments, data layer 620 can be implemented to facilitate integration with existing enterprise systems using one or more frameworks, such as .NET or Java, ensuring compatibility with a wide range of existing systems and providing flexibility for customization and extensibility. For example, data layer 620 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 620 can use the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain users can perform complex analytical tasks, apply machine learning algorithms, and derive valuable insights from the data. For instance, data layer 620 can use Apache Spark's machine learning libraries to develop predictive models for demand forecasting, optimize inventory levels, and identify potential supply chain risks.

In some embodiments, data layer 620 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 620 can implement data lineage and audit trail mechanisms, allowing users to trace the origin and history of data, ensuring data integrity and compliance with regulatory requirements.

In some embodiments, data layer 620 can be deployed in a cloud-native environment, leveraging containerization technologies such as Docker and orchestration frameworks like Kubernetes. This approach ensures scalability, resilience, and efficient resource allocation. For example, data layer 620 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 620 of RTDM module 600 can incorporate a highly scalable data lake, data lake 622, along with purpose-built PDSes, PDSes 624.1 to 624.N, and employing CDC mechanisms, data layer 620 ensures efficient data management, standardization, and real-time availability. In a non-limiting example, Data Layer 620 can be implemented utilizing any appropriate technology, such as .NET or Java, and/or distributed computing frameworks like Apache Spark, enables powerful data processing, advanced analytics, and machine learning capabilities. With robust data governance and security measures, data layer 620 ensures data integrity, confidentiality, and compliance. Through its scalable infrastructure and integration with existing systems, data layer 620 enables supply chain users to make data-driven decisions, optimize operations, and drive business success in the dynamic and complex distribution environment.

RTDM module 600 can include an AI module 630 configured to implement one or more algorithms and machine learning models to analyze the stored data in data layer 620 and derive meaningful insights. In some non-limiting examples, AI module 630 can apply predictive analytics, anomaly detection, and optimization algorithms to identify patterns, trends, and potential risks within the supply chain. AI module 630 can continuously learns from new data inputs and adapts its models to provide accurate and current insights. AI module 630 can generate predictions, recommendations, and alerts and publish such insights to dedicated data feeds.

Data engine layer 640 comprises a set of interconnected systems responsible for data ingestion, processing, transformation, and integration. Data engine layer 640 of RTDM module 600 can include a collection of headless engines 640.1 to 640.N that operate autonomously. These engines represent distinct functionalities within the system and can include, for example, one or more recommendation engines, insights engines, and subscription management engines. Engines 640.1 to 640.N can use the standardized data stored in the data mesh to deliver specific business logic and services. Each engine can be configured to be pluggable, allowing for flexibility and future expansion of the module's capabilities. Exemplary engines are shorn in FIG. 5, which are not intended to be limiting. Any additional headless engine can be included in data engine layer 640 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms can be applied to cleanse, aggregate, and enrich the data, making it ready for further analysis and integration.

Further, to facilitate integration and access to RTDM module 600, a data distribution mechanism can be employed. Data distribution mechanism 645 can be configured to include one or more APIs to facilitate distribution of data from the data mesh and engines to various endpoints, including user interfaces, micro front ends, and external systems.

Experience layer 650 focuses on delivering an intuitive and user-friendly interface for interacting with supply chain data. Experience layer 650 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 600 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, current information and insights to make informed decisions and optimize supply chain operations. Accordingly, RTDM module 600 facilitates supply chain and distribution management by providing a scalable, real-time data management solution. Its architecture allows for the rich integration of disparate data sources, efficient data standardization, and advanced analytics capabilities. The module's ability to replicate and standardize data from diverse ERPs, while maintaining auditable and repeatable transactions, provides a distinct advantage in enabling a unified view for vendors, resellers, customers, end customers, and other entities in a distribution system, including an IT distribution system.

### Automated Predictive Insights for Vendor Product Roadmap (PIPR) System

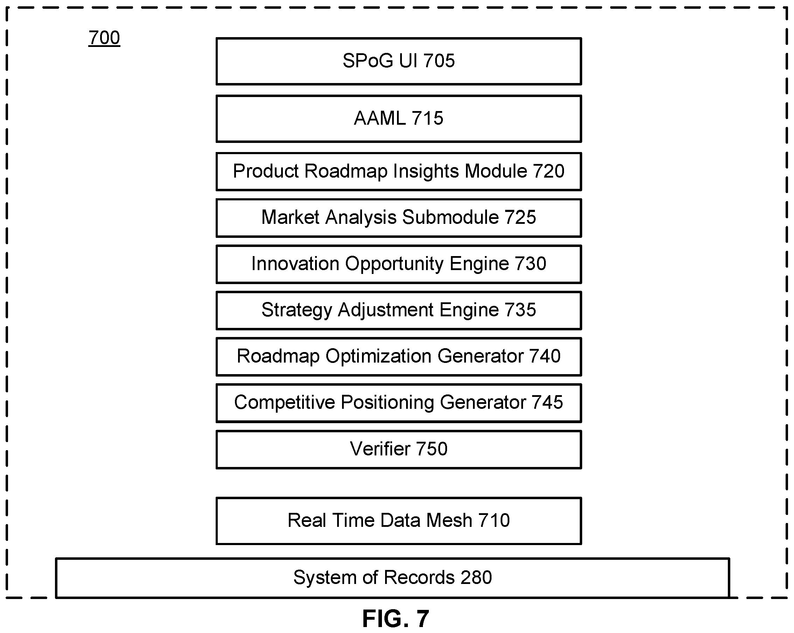

In an embodiment, FIG. 7 depicts System 700 configured for generating predictive insights for vendor product roadmaps. System 700 includes Real-Time Data Mesh (RTDM) 710, Single Pane of Glass User Interface (SPoG UI) 705, Advanced Analytics and Machine-Learning (AAML) Module 715, and Product Roadmap Insights (PRI) Module 720. System 700 can integrate streaming data processing capabilities within RTDM 710, enabling the handling of high-velocity, real-time data essential for immediate market responsiveness. RTDM 710 aggregates and standardizes data from diverse sources and processes this information in real-time, providing a foundation for dynamic, data-driven decision-making. RTDM 710 also integrates advanced data security measures, including encryption and fine-grained access controls, safeguarding sensitive information and ensuring compliance with stringent data protection regulations.

Single Pane of Glass User Interface (SPoG UI) 705 functions as the primary interface for System 700, providing users with access to a wide array of data analysis tools and visualizations. SPoG UI 705 enables users to interact with complex datasets, perform market trend analyses, and receive predictive recommendations for roadmap adjustments. This interface streamlines the process of extracting and interpreting actionable insights from data, allowing for an agile response to evolving market conditions.

Real-Time Data Mesh (RTDM) 710 acts as the central repository for data aggregation and standardization within System 700. RTDM 710 collects data from diverse sources, including customer feedback, product performance metrics, competitive intelligence, and market trends. It employs data warehousing and data lakes to manage both structured and unstructured data efficiently. Through the use of Extract, Transform, Load (ETL) processes and data normalization techniques, RTDM 710 ensures the consistency and accessibility of data across the system, facilitating real-time analysis and decision-making.

Advanced Analytics and Machine-Learning (AAML) Module 715 serves as the analytical engine of System 700, leveraging specialized algorithms to analyze data aggregated by RTDM 710. AAML Module 715 utilizes big data analytics tools and deep learning capabilities to conduct sentiment analysis, trend forecasting, and customer behavior analytics. It integrates machine learning algorithms trained on historical and real-time data to identify patterns and generate predictive insights for product roadmap adjustments. The module's architecture supports continuous learning, enabling the refinement of algorithms based on feedback loops to improve the precision and accuracy of insights. Advanced Analytics and Machine-Learning (AAML) Module 715 can employ advanced NLP techniques for deeper analysis of customer feedback and market trends. For example, AAML Module 715 can be configured to extract insights from unstructured text to better anticipate customer needs and identify emerging market opportunities. AAML Module 715 can also be configured to incorporate explainable AI (XAI) capabilities, offering transparency into the predictive modeling process and improving user trust by clarifying how insights and recommendations are derived.

Product Roadmap Insights (PRI) Module 720 can be configured to utilize the data processed by AAML Module 715 to generate targeted insights for product roadmap development. PRI Module 720 can also be configured to assess the alignment between product offerings and customer demands, leveraging predictive analytics to recommend strategic adjustments and improvements to the product roadmap. This module applies advanced methodologies to interpret market signals and align product strategies with market demands, facilitating a proactive approach to product development. Product Roadmap Insights (PRI) Module 720 can leverage data insights to provide targeted recommendations for product roadmap development, incorporating dynamic catalog management for automatic updates to product offerings based on predictive analytics outcomes. PRI Module 720 includes predictive maintenance features for hardware vendors, using IoT data to forecast maintenance needs and improve product reliability.

Market Analysis Sub-Module 725 extends the analytical capabilities of System 700, processing data from RTDM 710 for comprehensive market demand analysis, competitor benchmarking, and industry trend evaluation. This sub-module employs analytical tools to assess the market fit of products and identify opportunities for improvement and differentiation within the product roadmap. Market Analysis Sub-Module 725 integrates market trend projection tools for analyzing long-term market trends and assists in strategic planning, including monitoring regulatory compliance to alert vendors to changes that could impact product development and strategies.

Innovation Opportunity Engine 730 identifies and prioritizes product development opportunities by analyzing market data and customer insights from RTDM 710. Integrating predictive models from AAML Module 715, this engine dynamically suggests areas for innovation and improvement, ensuring product offerings are aligned with market needs and customer expectations. Innovation Opportunity Engine 730 can include expanded capabilities to dynamically identify product development opportunities, analyzing market data and customer insights to assess sustainability impacts and guide vendors towards environmentally responsible product strategies. Innovation Opportunity Engine 730 can perform analysis that enables identification of an untapped market for a certain mobile app using office productivity trends, and recommend a vendor to develop an app tailored to this demographic's needs.

Strategy Adjustment Engine 735 offers tools for vendors to adjust their product roadmaps based on real-time insights from RTDM 710. Integrated with SPoG UI 705, this engine supports the strategic selection and customization of roadmap strategies, providing the flexibility needed to adapt to market changes and customer feedback. Strategy Adjustment Engine 735 offers an array of tools for real-time roadmap strategy adjustments, supporting multi-tenancy to allow multiple departments or organizations to use System 700 while ensuring data isolation and security.

Roadmap Optimization Generator 740 performs real-time data synchronization with RTDM 710 through RESTful APIs and data connectors, optimizing product roadmap strategies to capitalize on market opportunities and align with vendor capabilities. Roadmap Optimization Generator 740 introduces workflow automation to orchestrate complex data processing and analysis tasks across modules, optimizing product roadmap strategies efficiently to align with market opportunities and vendor capabilities. For example, following a competitor's release of a groundbreaking product, Roadmap Optimization Generator 740 may perform an evaluation of a vendor roadmap to fast-track development of a competing technology, ensuring market competitiveness.

Competitive Positioning Model 745 analyzes competitive landscapes using data from RTDM 710 to recommend optimal market positioning strategies, improving vendors' market differentiation and competitive edge. For example, utilizing competitive intelligence ingested via RTDM 710, Competitive Positioning Model 745 can generate insights to advise a hardware vendor to position its new product in a premium segment based on feature uniqueness and market readiness, optimizing pricing strategy

Verifier 750 validates the alignment of roadmap strategies and product development plans with market data and vendor objectives, employing algorithms for consistency checking and error prevention to support strategic roadmap planning. Competitive Positioning Calculator 745 and Verifier 750 are configured for federated learning capabilities, performing analysis across decentralized datasets while maintaining data privacy. They utilize predictive analytics and machine learning algorithms to improve competitive positioning and ensure roadmap consistency.

System 700 integrates a multi-layered management module to handle interactions across product development, market analysis, and strategy formulation layers. This includes API integrations and lifecycle management tools for execution of roadmap strategies. System 700 integrates data from multiple sources into a unified interface via SPoG UI 705, automates the generation of predictive insights for product roadmaps via AAML 715, and maintains a real-time, standardized data repository via RTDM 710. This architecture enables efficient and precise processes for developing and adjusting vendor product roadmaps, improving strategic decision-making in the technology product industry.

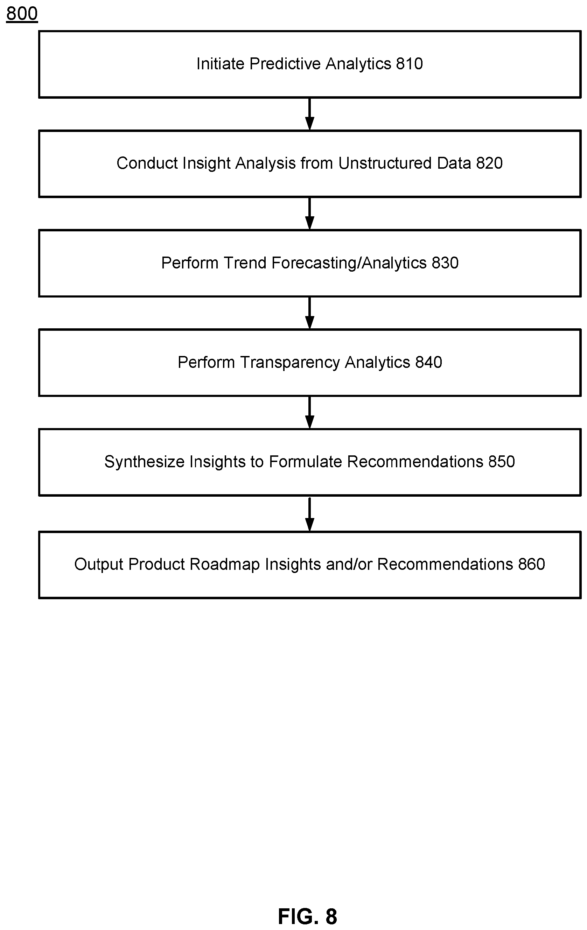

FIG. 8 illustrates a flow diagram of method 800 for predictive analytics and insight generation in a PIPR system, tailored to optimize product roadmap strategies through data-driven insights. This method delineates a series of operations leveraging the capabilities of the Advanced Analytics and Machine-Learning (AAML) Module 715, focusing on extracting, analyzing, and applying predictive insights derived from comprehensive data sets.

At operation 810, the system initiates the predictive analytics process. AAML Module 715 begins by aggregating data collected by RTDM 710, which includes an extensive range of inputs such as customer feedback, market trends, competitive intelligence, and product performance metrics. This aggregation process is foundational, ensuring that the analysis is based on a holistic view of the data landscape relevant to product development and market positioning.

At operation 820, AAML Module 715 conducts advanced natural language processing (NLP) analysis. This operation involves parsing and interpreting unstructured text data from various sources, employing techniques such as sentiment analysis to gauge customer sentiment and thematic analysis to identify prevailing topics and trends within customer feedback and market commentary. The ability to extract meaningful insights from unstructured data is crucial for understanding nuanced market demands and customer expectations.

At operation 830, AAML Module 715 can perform trend forecasting and customer behavior analytics. Using statistical models, machine learning algorithms and/or a combination thereof, AAML Module 715 analyzes historical and real-time data to predict future market trends and customer behaviors. This predictive modeling considers factors such as seasonal variations, market dynamics, and emerging trends to forecast future states and identify potential opportunities or challenges for product strategies.

At operation 840, AAML Module 715 integrates AI and/or ML algorithms to improve transparency and trust in the predictive modeling process. Operation 840 can include generating insights into how the module's algorithms arrive at their predictions and recommendations, providing users with a clear understanding of the analytical foundation behind suggested roadmap adjustments. In some embodiments, Operation 840 can include incorporating explainable AI (XAI) capabilities into roadmap generation analysis. The incorporation of XAI can improve transparency of the system's outputs, enabling more informed decision-making.

At operation 850, the system synthesizes the insights generated from the predictive analytics process to formulate recommendations for product roadmap development. PRI Module 720 leverages these insights to assess the alignment between existing product offerings and identified market needs, suggesting strategic adjustments or improvements to the product roadmap. This operation is critical for translating data-driven insights into tangible roadmap strategies that are aligned with market demands and customer expectations.

At operation 860, the system communicates the predictive insights and roadmap recommendations to users. Through SPoG UI 705, users are presented with a comprehensive overview of the insights derived from the analytics process, along with specific recommendations for adjusting product roadmaps. In some embodiments operation 860 can include automated implementation of one or more roadmap recommendations. Operation 860 enables users to benefit from pattern recognition and analysis decisions to improve product competitiveness and market alignment.

Method 800, as depicted in FIG. 8, represents a systematic approach to leveraging advanced analytics and machine learning for predictive insight generation within the PIPR system. By following this method, vendors can harness the power of data to inform and optimize their product roadmap strategies, ensuring that their offerings remain responsive to market trends and customer needs.

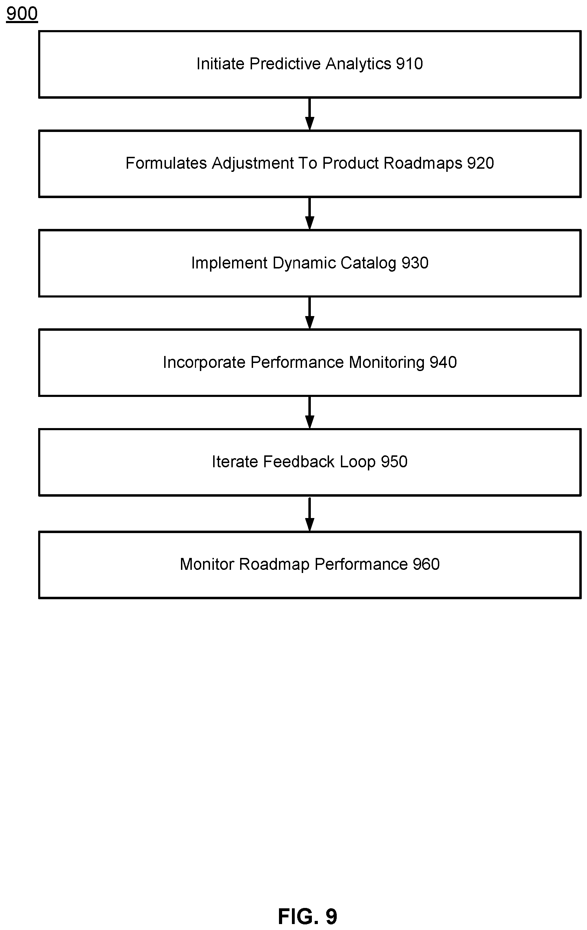

FIG. 9 illustrates a flow diagram of method 900 for roadmap adjustment and optimization in a PIPR system, designed to dynamically align product roadmaps with evolving market trends and customer demands. This method capitalizes on the integration between the Predictive Insights and Roadmap Integration (PRI) Module 720 and other system components to ensure that product strategies are both forward-looking and grounded in data-driven insights.

At operation 910, the system initiates the roadmap adjustment process. PRI Module 720 employs the insights generated from its advanced analytics processes to conduct a comprehensive evaluation of current product roadmaps. This involves comparing existing roadmap trajectories with the latest predictive insights on market trends, customer demands, and competitive landscapes to identify areas where adjustments or improvements are necessary.

At operation 920, based on the evaluation, the system formulates strategic adjustments or improvements to the product roadmaps. This step leverages the data-driven insights for decision-making, ensuring that any proposed changes are not only reactive to current market conditions but also proactive in anticipating future shifts. Strategies may include the introduction of new features, re-prioritization of development efforts, or adjustments to product launch timelines.

At operation 930, the system implements dynamic catalog management to reflect the strategic adjustments informed by predictive insights. This operation involves automatically updating product catalogs and offerings in real-time, ensuring that the market-facing aspects of the product strategy are consistent with the internal roadmap adjustments. This dynamic catalog management is facilitated through integration with the Dynamic Catalog Management System (DCMS), allowing for immediate updates across digital and physical sales channels.

At operation 940, the method incorporates performance monitoring and maintenance prediction for hardware products. Utilizing IoT data, the system implements predictive maintenance strategies that anticipate potential service needs before they manifest as critical issues. This preemptive approach to maintenance not only improves product reliability but also optimizes resource allocation for maintenance activities, ensuring that service interventions are both timely and efficient.

At operation 950, the system establishes feedback loops for continuous learning and adaptation. This involves continuously refining predictive models and strategies based on real-time market response and product performance data. By incorporating feedback mechanisms, the system ensures that the predictive analytics and roadmap optimization processes remain dynamic and responsive to changing market conditions and customer feedback.

At operation 960, the method concludes with the implementation of the adjusted roadmaps and the ongoing monitoring of their performance. Stakeholders are provided with detailed reports on the outcomes of the roadmap adjustments, including metrics on market response, product performance, and customer satisfaction. This final step ensures that the strategic decisions informed by predictive insights are effectively executed and that the impact of these decisions is closely monitored for continuous improvement.

Method 900, as depicted in FIG. 9, outlines a comprehensive approach to ensuring that product roadmaps are continuously optimized to align with market demands and customer expectations. By integrating predictive analytics, dynamic catalog management, and continuous model training mechanisms, the PIPR system enables vendors to maintain a competitive edge through data-driven roadmap strategies.

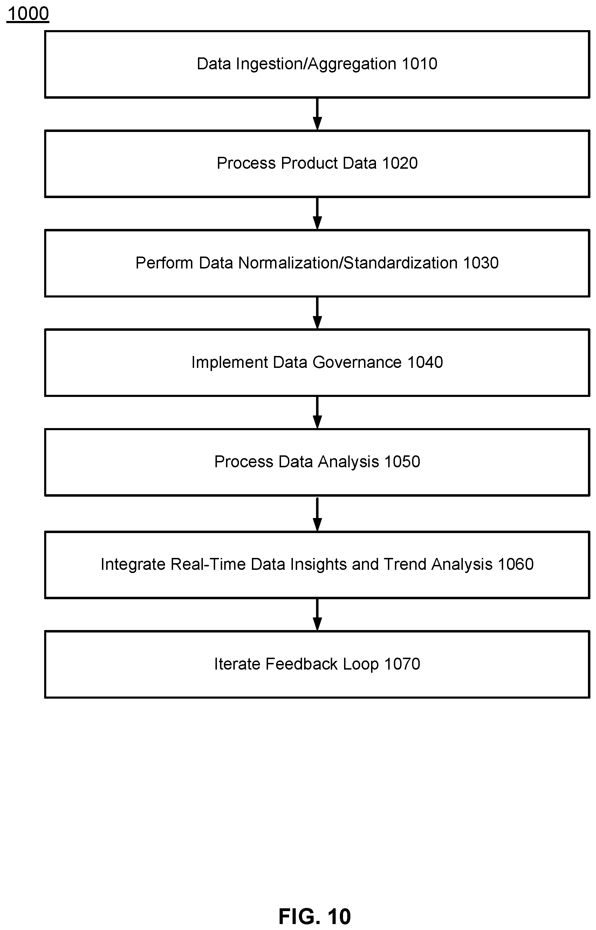

FIG. 10 illustrates a flow diagram for method 1000 for Real-Time Data Integration and Analysis Flow within a Predictive Insight and Product Roadmap (PIPR) system. This method facilitates the integration, processing, and analysis of real-time data to drive predictive insights and strategic decisions.

At operation 1010, the PIPR system initiates the data collection process. This involves aggregating real-time data from a myriad of sources, such as customer feedback platforms, market trend analyses, competitive intelligence databases, and product performance metrics. This comprehensive data collection is crucial for understanding the multifaceted aspects of market demands, customer expectations, and competitive landscapes.

At operation 1020, the gathered data is processed through the Real-Time Decision Manager (RTDM) 710. This step encompasses the Extract, Transform, Load (ETL) processes, where data is meticulously extracted from its sources, transformed to ensure consistency and relevance, and finally loaded into a centralized data warehouse or lake for further analysis.

At operation 1030, data standardization is performed within RTDM 710. This operation applies advanced data normalization techniques to ensure uniformity across the diverse datasets. The standardization process is essential for facilitating accurate and meaningful analysis by removing inconsistencies and preparing the data for comprehensive analytical processes.

At operation 1040, the PIPR system implements security measures to protect the integrity and confidentiality of the collected data. This includes the enforcement of data encryption standards and strict access control policies. Such security implementations are vital for maintaining the trust of customers and partners while ensuring compliance with regulatory requirements.

At operation 1050, the standardized and secured data is subjected to AAML Module 715 analysis. Operation 1050 can include performing analytics to process data in real-time, allowing for the immediate identification of trends, insights, and potential opportunities about product roadmaps. Through this dynamic analysis, the system can generate actionable intelligence that informs decision-making and strategy formulation.

At operation 1060, the insights derived from the real-time data analysis are integrated into the decision-making processes. This involves utilizing the insights to inform and adjust product roadmaps, marketing strategies, and customer engagement plans. The ability to act on real-time insights ensures that the organization remains agile and responsive to market dynamics and customer needs.

At operation 1070, the PIPR system establishes a continuous feedback loop. This operation involves monitoring the outcomes of implemented strategies and the performance of products in the market. The feedback collected through this loop is fed back into the system, enabling continuous learning and adaptation of the predictive models and strategies based on real-world performance data and market response.

Through method 1000, the PIPR system leverages real-time data integration and analysis to foster a proactive and informed approach to product development, marketing, and customer engagement. This method underscores the importance of agile decision-making supported by data-driven insights, ensuring that the organization can swiftly adapt to market changes and customer demands.

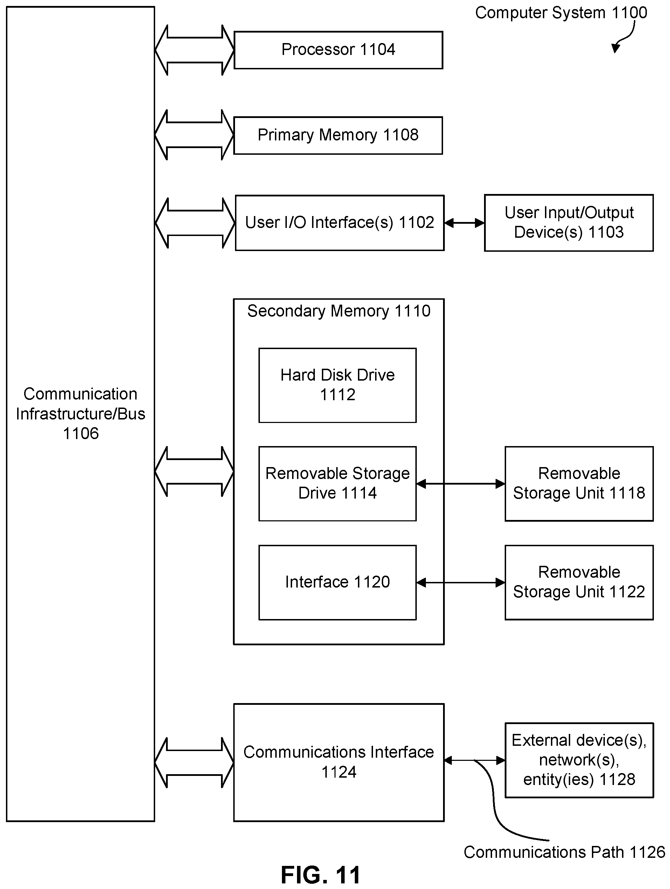

FIG. 11 depicts a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

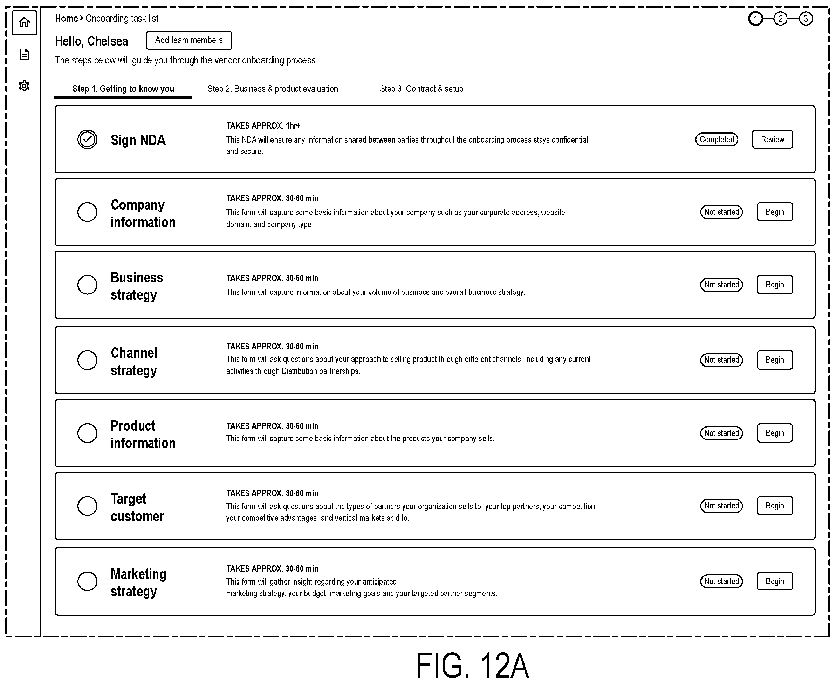

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 12A depicts a Vendor Onboarding Initiation screen that represents the initial step of the vendor onboarding process. It provides a form or interface where vendors can express their interest in joining the distribution ecosystem. Vendors can enter their basic information, such as company details, contact information, and product catalogs.

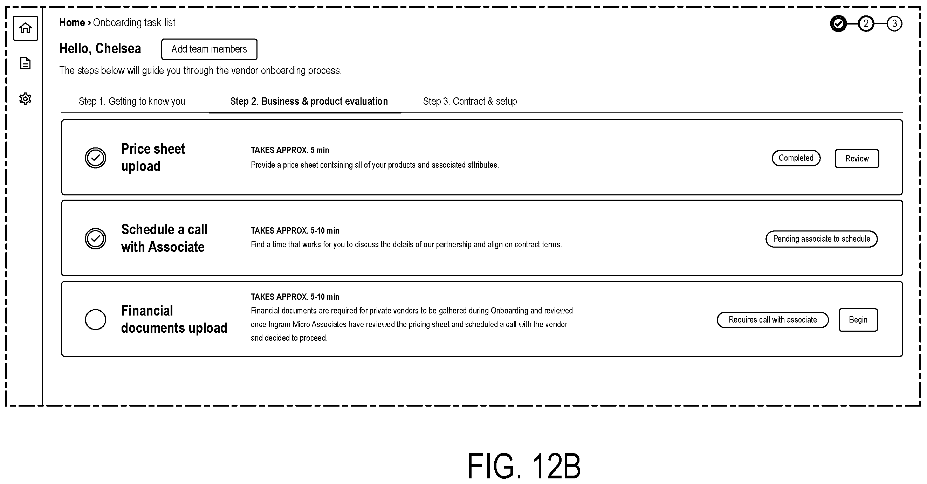

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

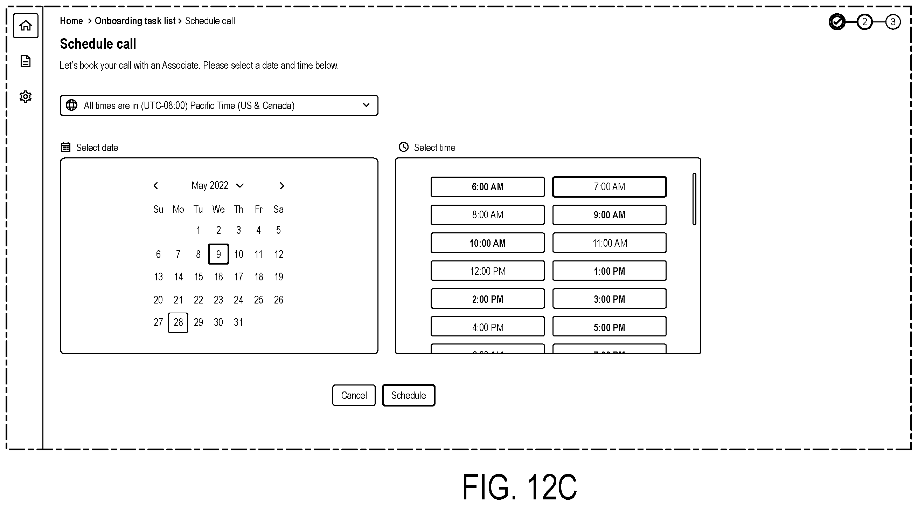

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

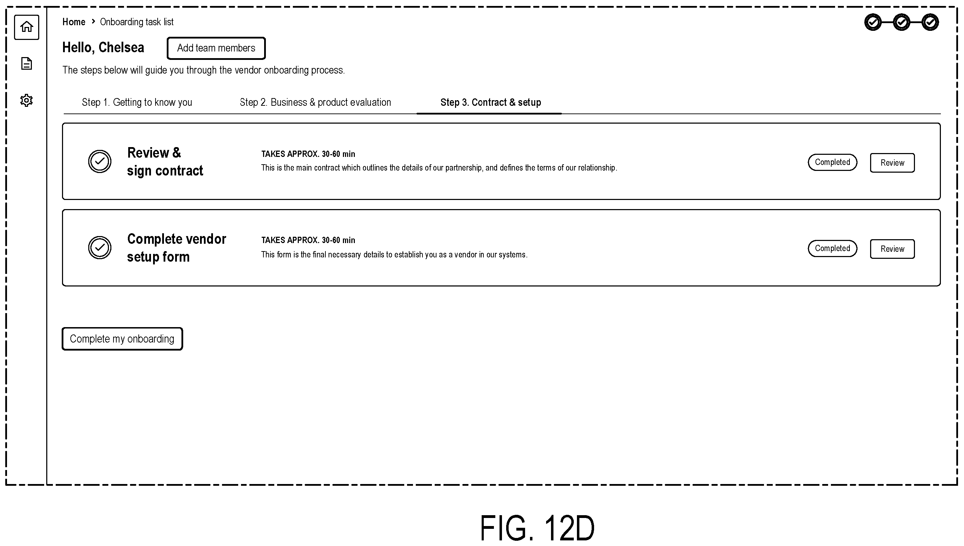

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

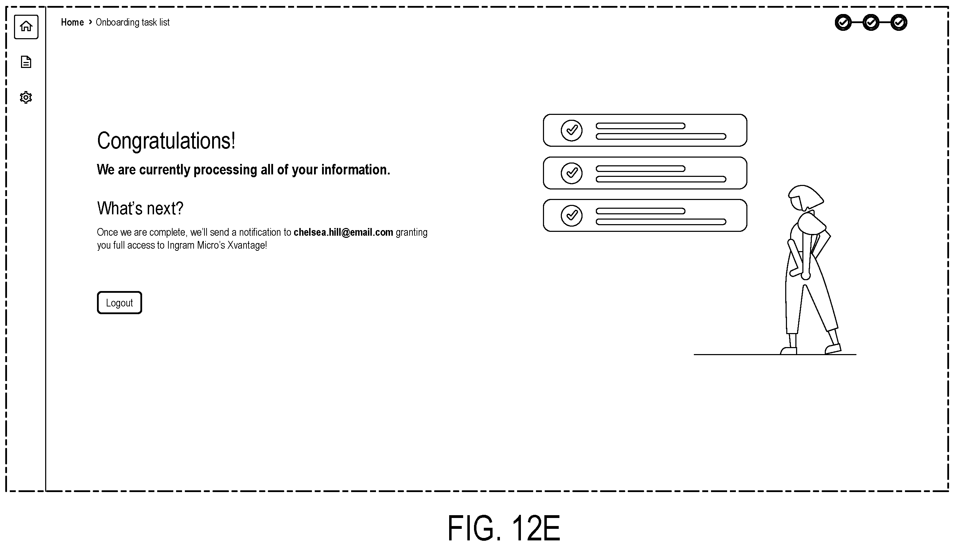

FIG. 12E depicts a Vendor Onboarding Completion Screen that confirms the successful completion of the vendor onboarding process. It may display a congratulatory message or summary of the completed tasks, indicating that the vendor is now officially onboarded into the distribution ecosystem.

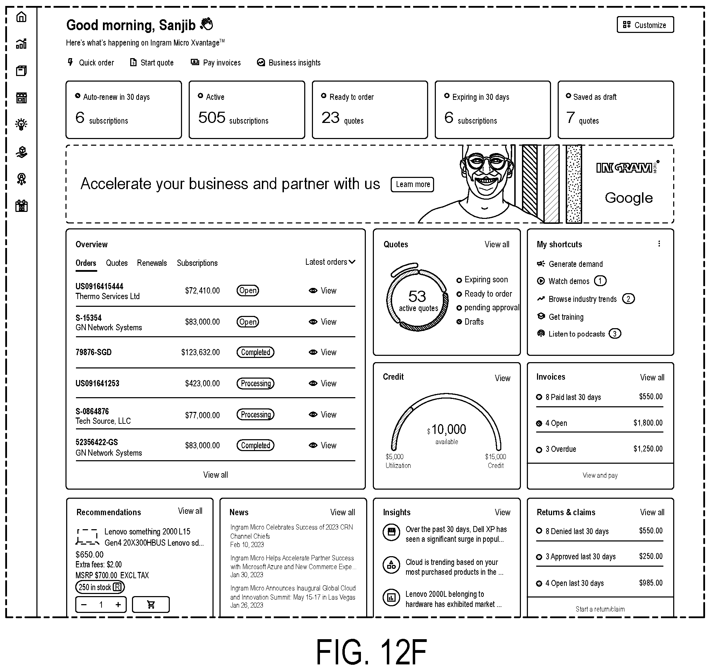

FIG. 12F depicts a Partner Dashboard that offers partners or users a centralized view of relevant information and metrics related to their partnership with the distribution ecosystem. It provides an overview of performance indicators, key data points, and actionable insights to facilitate effective collaboration and decision-making.

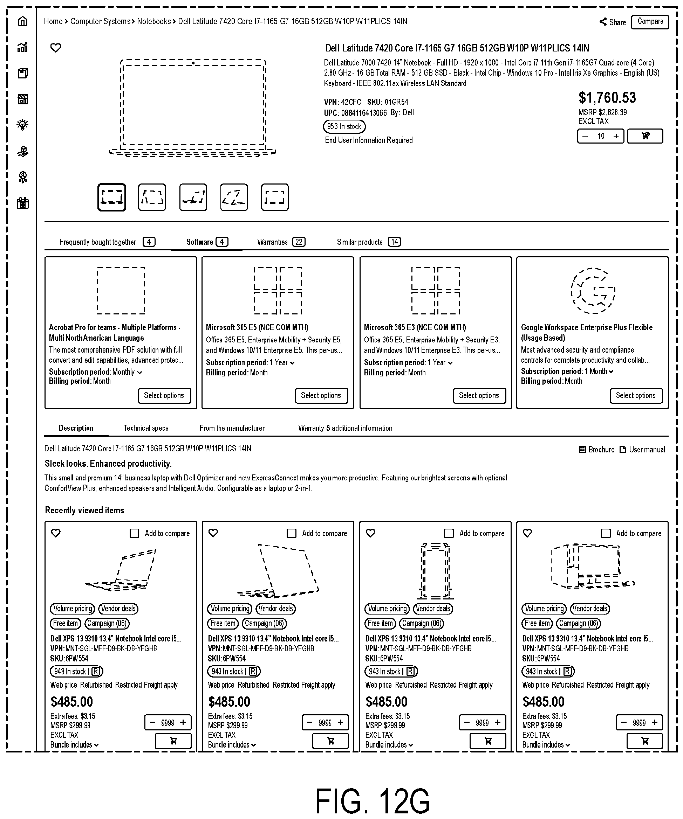

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

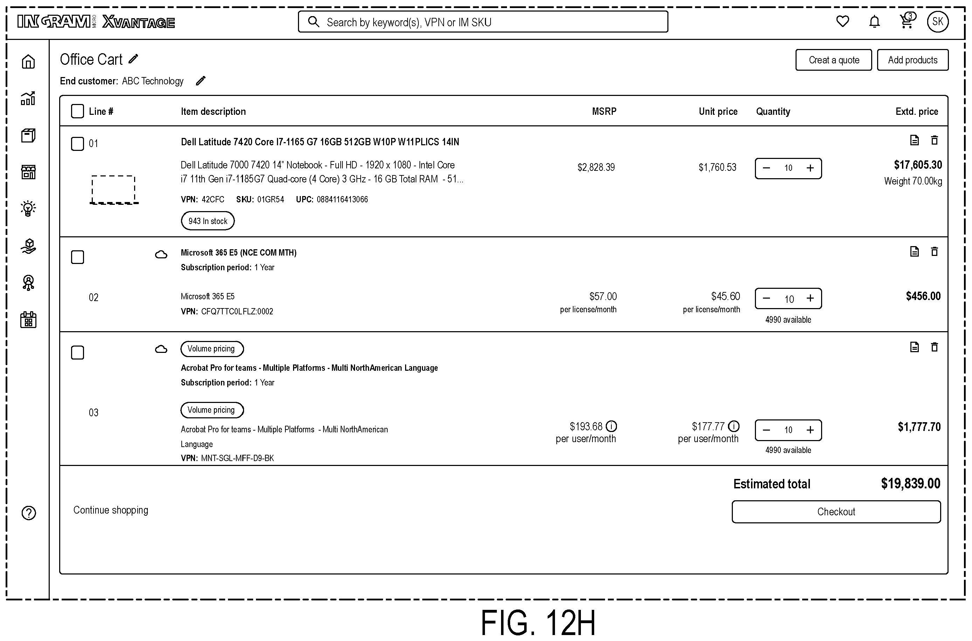

FIG. 12H depicts a Customer Subscription Cart that allows customers to manage their subscription-based purchases. It displays the selected subscription plans, pricing, and duration. Customers can review and modify their subscription details before finalizing their choices.

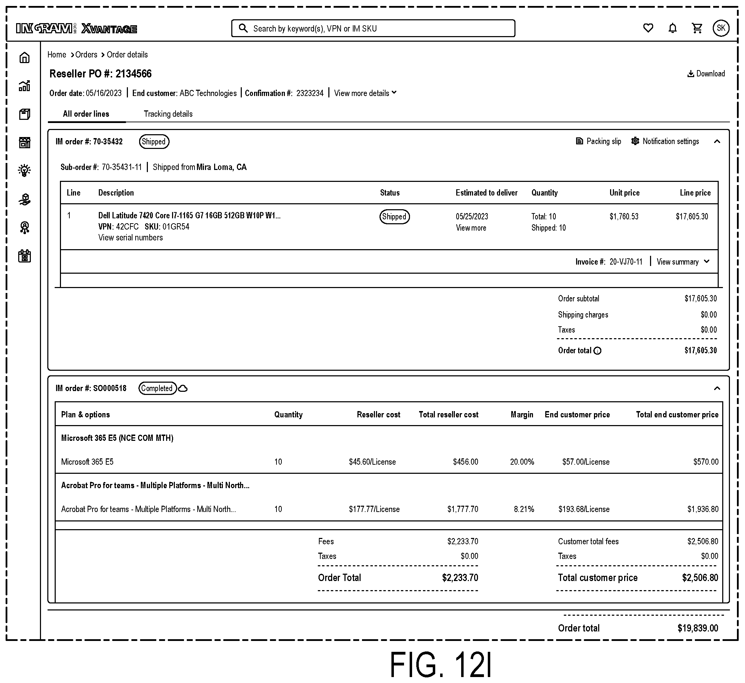

FIG. 12I depicts a Customer Order Summary that provides a summary of the customer's order, including details such as the products or subscriptions purchased, quantities, pricing, and any applied discounts or promotions. It allows customers to review their order before confirming the purchase.

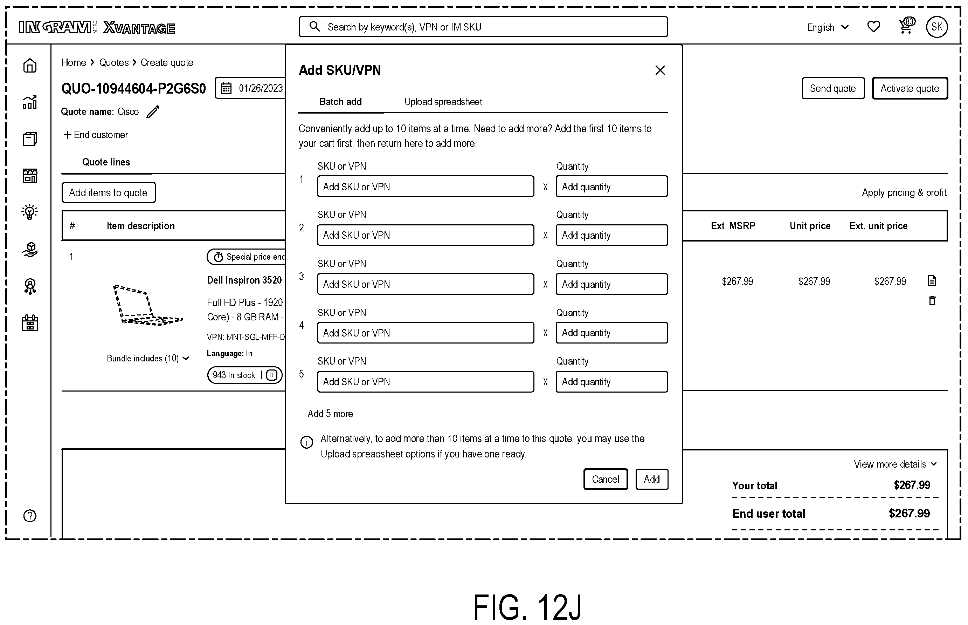

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

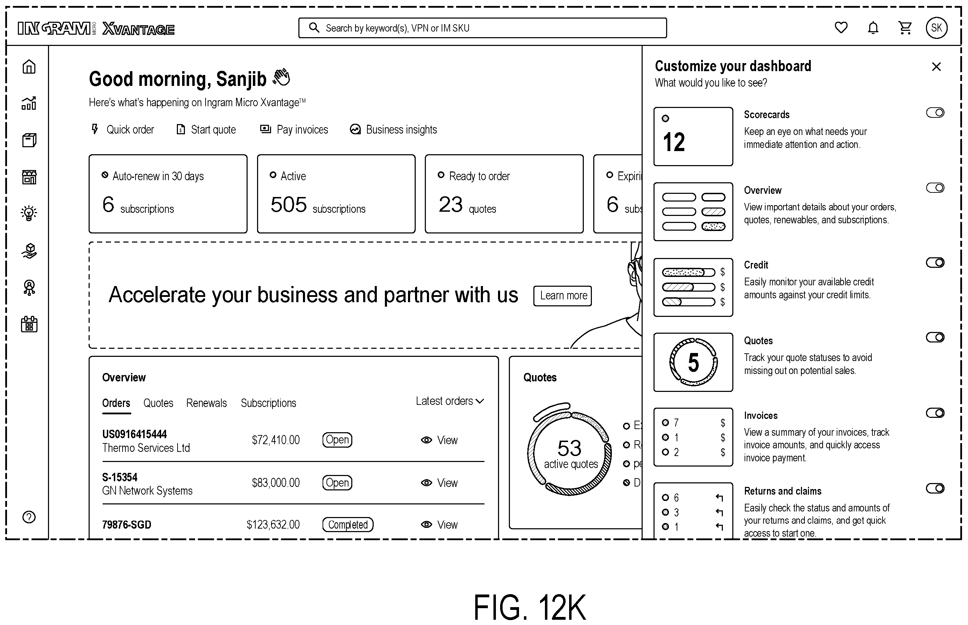

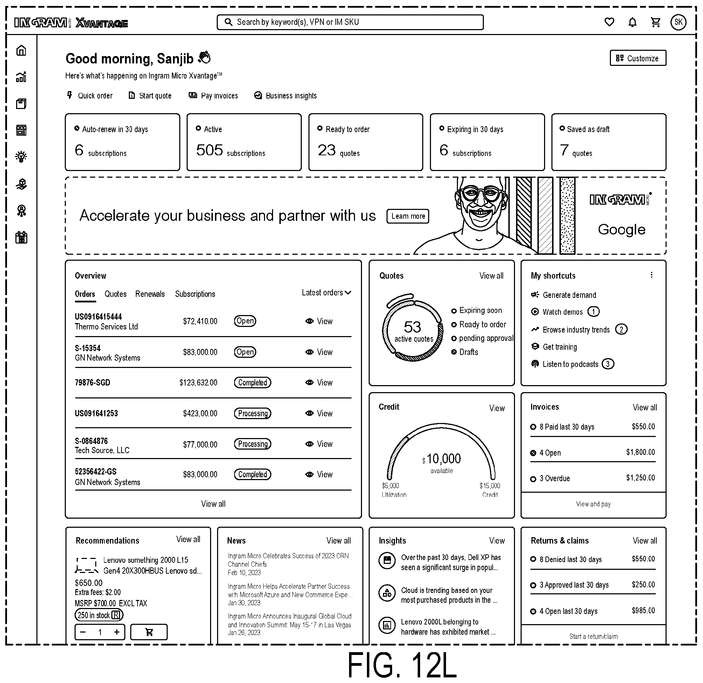

FIGS. 12K and 12L depicts Dashboard Order Summary to display summarized information about orders placed within the distribution ecosystem. They present key order details, such as order number, customer name, product or subscription information, quantity, and order status. The dashboard provides an overview of order activity, enabling users to track and manage orders efficiently.

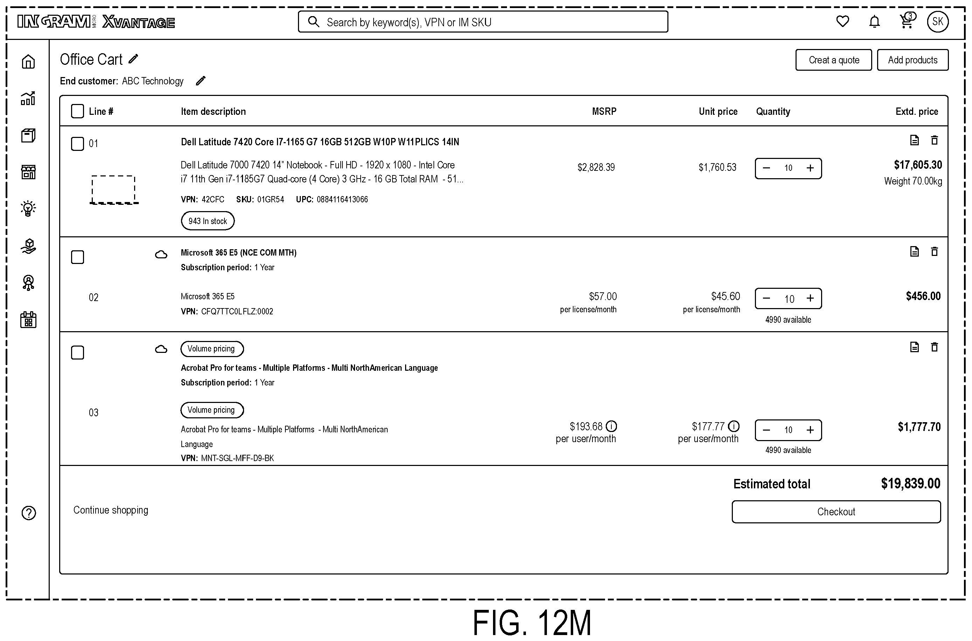

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

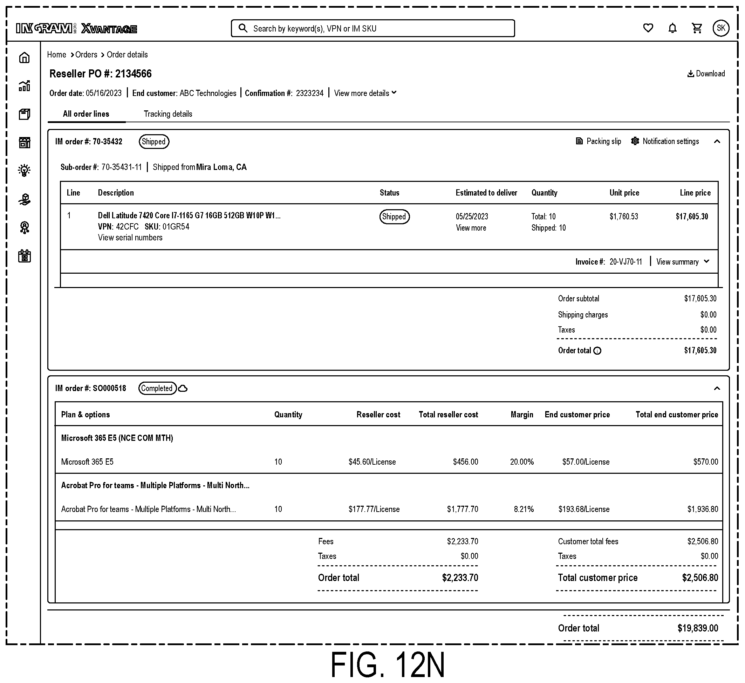

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

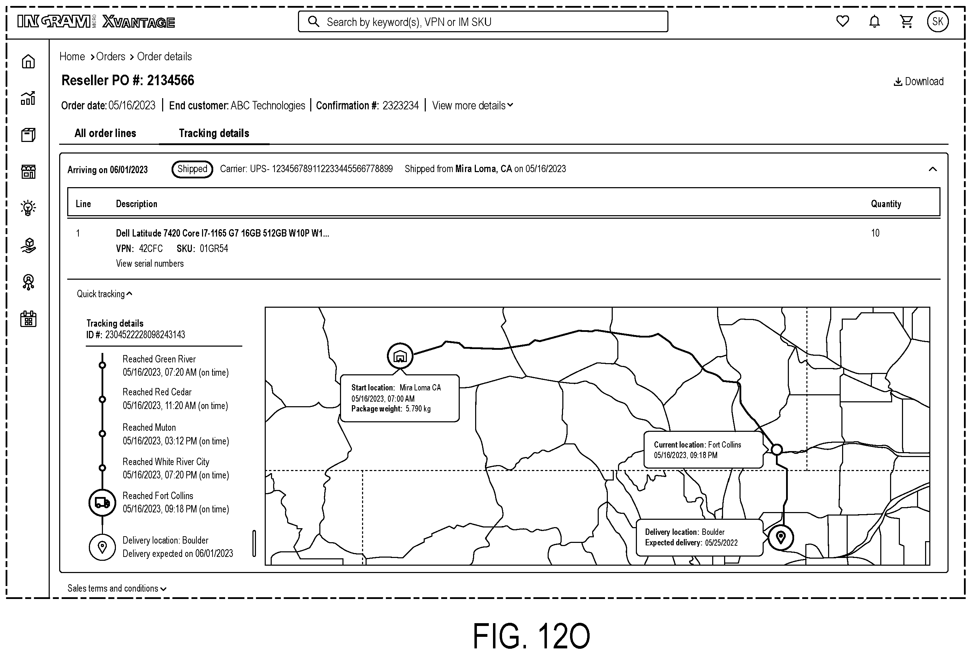

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

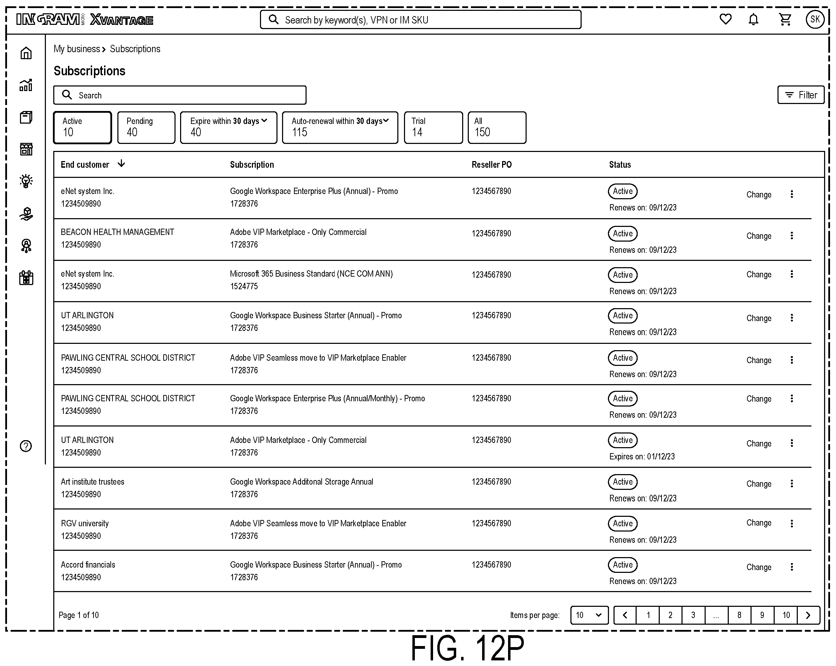

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

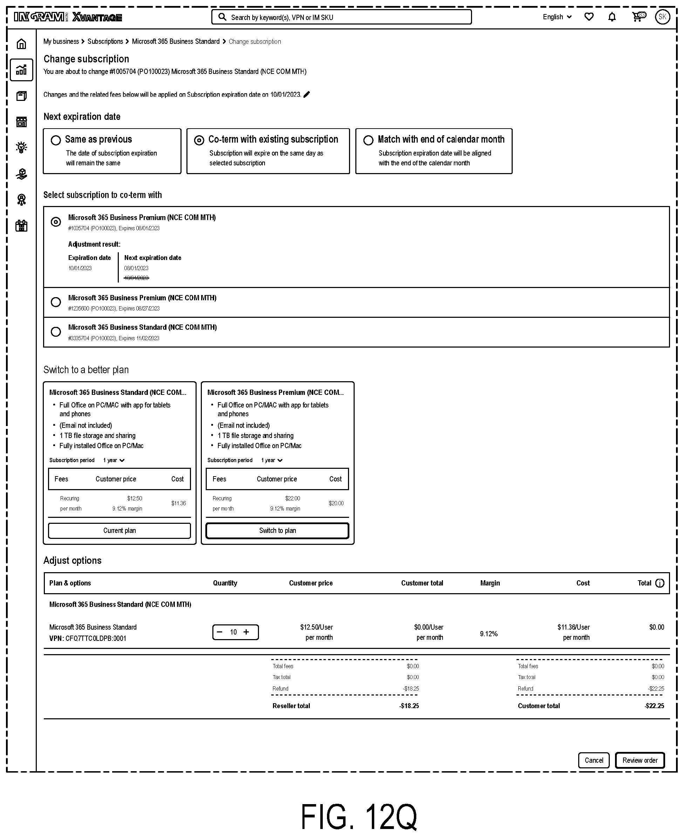

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing users with a comprehensive and user-friendly interface for vendor onboarding, partnership management, customer interaction, order management, subscription management, and tracking within the distribution ecosystem.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computer-implemented method for generating predictive insights into vendor product roadmaps, the method comprising:
Automatically collecting data from two or more predefined sources including market trends, customer feedback, and technological advancements collected and standardized by a data layer within a Real-Time Data Mesh (RTDM);
analyzing the collected data with a machine learning model within an Analytics and Machine-Learning (AAML) module to identify one or more patterns, wherein the model includes at least one of a convolutional neural network for image data patterns and a recurrent neural network for temporal data patterns;
generating predictive insights based on the patterns for vendor product roadmaps based on the analysis, wherein the insights suggest one or more potential product modifications;
automatically updating vendor product roadmaps in a roadmap management module to incorporate the generated predictive insights.

2. The method of claim 1, further comprising validating the predictive insights against historical data to ensure accuracy and relevance, wherein the validating is implemented using a statistical analysis algorithm to compare the predictive insights against a historical data repository of the RTDM, and verifies the predictive insights' relevance based on a predefined accuracy threshold.

3. The method of claim 1, wherein the machine learning model is dynamically updated to incorporate new data sources and types.

4. The method of claim 1, further comprising the step of visualizing the predictive insights on a user interface for interpretation, and wherein generating the predictive insights comprises identifying the one or more potential product modifications by a decision-tree analysis algorithm.

5. The method of claim 1, further comprising notifying stakeholders of significant insights or roadmap changes through automated communication channels.

6. The method of claim 1, wherein the collected data includes competitive analysis to gauge market positioning and opportunities for differentiation.

7. The method of claim 1, further including the step of integrating feedback from the updated product roadmaps to refine future predictions.

8. A computer-implemented method for optimizing product roadmap development based on predictive insights, comprising:
receiving predictive insights generated via an Analytics and Machine-Learning (AAML) module from an analysis of market trends, customer feedback, and/or technological advancements collected and standardized by a data layer within a Real-Time Data Mesh (RTDM);
dynamically adjusting existing product roadmaps using a roadmap optimization module to align with the latest predictive insights, including modifying development timelines and product priorities;
communicating the adjusted product roadmaps to users through an integrated communication module of a Single Pane of Glass (SPoG) user interface (UI), facilitating action.

9. The method of claim 8, further comprising the application of scenario analysis to evaluate potential outcomes of roadmap adjustments based on real-time data captured and processed by the RTDM.

10. The method of claim 8, including the utilization of a decision-support system to prioritize roadmap adjustments based on strategic importance and resource availability based on insights derived via the data engine layer of the RTDM.

11. The method of claim 8, further comprising aggregating insights from a plurality of data sources for product feature enhancement.

12. The method of claim 8, wherein adjustments to the product roadmaps are dynamically reflected in project management tools and resources allocation by real-time data synchronization with the RTDM.

13. The method of claim 8, further comprising the continuous monitoring of market response via the data layer of the RTDM to implemented roadmap changes for informing future adjustments.

14. The method of claim 8, further comprising leveraging collaborative platforms for user feedback on roadmap adjustments to ensure alignment with market needs and/or organizational goals.

15. A system for generating and optimizing vendor product roadmaps based on predictive insights, comprising:
a Real-Time Data Mesh (RTDM) configured to automatically aggregate data from predefined sources relevant to product development;
an Analytics and Machine-Learning (AAML) module equipped with a machine learning engine designed to analyze the aggregated data and generate predictive insights regarding market trends, customer preferences, and technology advancements;
a roadmap optimization module for dynamically adjusting product roadmaps based on the generated insights, ensuring the roadmaps are aligned with current market demands and opportunities;
a communication module for disseminating updated roadmaps and insights to stakeholders, enabling informed decision-making and strategic planning.

16. The system of claim 15, wherein the data collection module integrates real-time market data to ensure up-to-date analysis via a data layer within the RTDM.

17. The system of claim 15, wherein the AAML module implements predictive analytics and/or scenario modeling to support decision-making.

18. The system of claim 15, featuring an automated notification system to alert users of critical insights and roadmap updates.

19. The system of claim 15, including a feedback mechanism for incorporating user input into the roadmap development process via a Single Pane of Glass (SPoG) user interface (UI).

20. The system of claim 19, wherein the SPoG UI is configured to support cross-functional accessibility, enabling collaborative review and adjustment of product roadmaps.
